# EUROPÄISCHE PATENTANMELDUNG

(11) **EP 1 821 209 A1**
(43) Veröffentlichungstag der Anmeldung: **22.08.2007**
(21) Anmeldenummer: 06003171.3
(22) Anmeldetag: 16.02.2006
(51) Int. Cl.: G06F 9/45, G05B 19/41

(54) **Verfahren zum Datenbankzugriff in einem Automatisierungssystem**

(71) Anmelder: SIEMENS AKTIENGESELLSCHAFT, 80333 München (DE)
(72) Erfinder: Ott, Alexander, 76337 Waldbronn-Etzenrot (DE)

(57) **Zusammenfassung**

Es wird ein Verfahren zum Betrieb eines Automatisierungssystems (10) mit einem Zugriff auf eine Datenbasis (18) angegeben, wobei der Zugriff auf die Datenbasis (18) mittels zumindest einer vorgegebenen Zugriffsfunktion (26) erfolgt, indem eine in dem Automatisierungssystem (10) ablaufende oder durch das Automatisierungssystem (10) ausgeführte Zielapplikation (36) zum Zugriff auf die Datenbasis (18) die Zugriffsfunktion (26) aufruft, danach die Zugriffsfunktion (26) den Zugriff auf die Datenbasis (18) vornimmt und die durch die Zielapplikation (36) angeforderten Daten (30) an diese liefert, wobei zumindest eine Zugriffsfunktion (26) zum Zugriff auf die Datenbasis (18) in einem Quellcode mit der Datenbasis (18) assoziiert ist und wobei beim oder im Zusammenhang mit dem Aufruf der Zugriffsfunktion (26) eine Umsetzung des Quellcodes der Zugriffsfunktion (26) erfolgt, die deren Ausführung ermöglicht.

## Beschreibung

Die Erfindung betrifft ein Verfahren zum Betrieb eines Automatisierungssystems, insbesondere ein Verfahren zum Betrieb eines Automatisierungssystems beim Abruf von Daten aus einer Datenbasis (Datenaustausch), gemäß dem Oberbegriff des Anspruchs 1. Automatisierungssysteme und auch der im Oberbegriff des Anspruchs 1 beschriebene Abruf von Daten sind allgemein bekannt.

Nachteilig bei bekannten Verfahren der oben genannten Art ist jedoch, dass bei Veränderungen an der Datenbasis ein Zugriff auf die Datenbasis, insbesondere ein Austausch von Daten mit der Datenbasis, nicht mehr ohne weiteres, d. h. insbesondere nicht ohne entsprechende Anpassungen der jeweiligen Softwareapplikationen, die auf die Datenbasis zugreifen, möglich ist.

Der Erfindung liegt daher die Aufgabe zugrunde, ein verbessertes Datenaustauschverfahren anzugeben, das insbesondere einen Zugriff auf die Datenbasis auch dann noch erlaubt, wenn sich die Struktur der Datenbasis ändert, und zwar ohne dass dazu ein Eingriff in eine den Zugriff auf die Datenbasis vornehmende Zielapplikation erforderlich ist.

Diese Aufgabe wird erfindungsgemäß mit den Merkmalen des Anspruchs 1 gelöst. Dazu ist bei einem Verfahren zum Betrieb eines Automatisierungssystems mit einem Zugriff auf eine Datenbasis, wobei der Zugriff auf die Datenbasis mittels zumindest einer vorgegebenen Zugriffsfunktion erfolgt, indem eine in dem Automatisierungssystem ablaufende oder durch das Automatisierungssystem ausgeführte Zielapplikation zum Zugriff auf die Datenbasis zunächst die Zugriffsfunktion aufruft, daraufhin die Zugriffsfunktion den Zugriff auf die Datenbasis vornimmt und schließlich an die Zielapplikation die von dieser angeforderten Daten liefert, vorgesehen, dass zumindest eine Zugriffsfunktion zum Zugriff auf die Datenbasis in einem Quellcode mit der Datenbasis assoziiert ist und dass beim oder im Zusammenhang mit dem Aufruf der Zugriffsfunktion eine Umsetzung, insbesondere eine so genannte Kompilierung, des Quellcodes der Zugriffsfunktion erfolgt, die deren Ausführung und/oder Abarbeitung ermöglicht.

Zur Erläuterung der verwendeten Begriffe wird darauf hingewiesen, dass der Begriff "Automatisierungssystem" eine Mehrzahl vernetzter, also in geeigneter Form kommunikativ verbundener Automatisierungsgeräte die darauf ablaufende Software, also insbesondere eine oder mehrere Applikationen und ggf. die Hard- und Software zur kommunikativen Verbindung umfasst. Ein Automatisierungssystem interagiert normalerweise mit einem gesteuerten und/oder überwachten technischen Prozess. Der einfachste Fall eines Automatisierungssystems ist allerdings ein einzelnes Automatisierungsgerät.

Der Begriff "Automatisierungsgerät" umfasst sämtliche Geräte, Einrichtungen oder Systeme, also neben z. B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Die Formulierung "Umsetzung des Quellcodes", wobei Kompilierung ein Beispiel für eine solche Umsetzung ist, wird im Folgenden ggf. auch kurz als Kompilierung ausgedrückt, wobei die ursprüngliche Reichweite der Formulierung erhalten bleiben soll. Die weiter unten eingeführte Formulierung "ausführbares Äquivalent [des Quellcodes]" wird analog entsprechend kurz auch als Kompiliat ausgedrückt.

Die Erfindung geht von der Erkenntnis aus, dass für einen Zugriff auf Daten, also z. B. Daten in einer Datenbasis, eine Information über eine den Daten zugrunde liegende Struktur erforderlich ist. Verändert sich diese Datenstruktur, etwa aufgrund einer überarbeiteten Version der Datenbasis nach Erweiterungen oder dergleichen, so muss auch eine diesbezügliche Strukturbeschreibung angepasst werden. Dieses Problem wird bisher mit unterschiedlichen Methoden der Strukturbeschreibung angegangen (Datenbanken, insbesondere SQL; XML; etc.). Bei solchen Verfahren werden die Daten anhand einer Beschreibung interpretiert. Die damit in gewissem Rahmen mögliche Interpretation der Daten ist aufgrund der Komplexität der Beschreibung sehr rechenzeitaufwendig.

Nach bester Kenntnis der Anmelderin sind bisher Zugriffs-funktionen und die Inhalte der Datenbasis, also die eigentlichen Daten und/oder deren Layout, also insbesondere die zugrunde liegenden Datenstrukturen, getrennt gehandhabt worden. Etwaige Änderungen der Datenstrukturen erfordern Änderungen an den Zugriffsfunktionen oder den von den Zugriffsfunktionen interpretierten Beschreibungen der Datenstrukturen. In diesem Zusammenhang kommt erschwerend hinzu, dass die Zugriffsfunktionen in vorkompilierter, also hardwarespezifischer Version vorliegen und insofern nicht für unterschiedliche Hardwareplattformen geeignet sind. Schließlich ist eine Interpretation von Beschreibungen der Datenstrukturen sehr rechenzeitaufwendig, so dass eine etwaige Lösungsmöglichkeit in dieser Richtung ungeeignet erscheint.

Ein zentraler Aspekt der Erfindung ist entsprechend die damit gegebene Möglichkeit zum versionsunabhängigen und/oder hardwareplattformunabhängigen Zugriff auf beliebig strukturierte Daten ohne den hohen Rechenaufwand für die Interpretation einer Datenbeschreibung.

Dazu ist zumindest eine Zugriffsfunktion zum Zugriff auf die Datenbasis in einem Quellcode mit der Datenbasis assoziiert. Bei evtl. Änderungen der Datenbasis kann also unmittelbar eine Änderung der jeweiligen Zugriffsfunktion erfolgen und die Datenbasis liefert stets die zum Zugriff auf die Daten entsprechend der aktuellen Struktur geeignete Zugriffsfunktion. Damit mittels der im Quellcode vorliegenden Zugriffsfunktion ein Zugriff auf die Daten erfolgen kann, ist beim oder im Zusammenhang mit dem Aufruf der jeweiligen Zugriffsfunktion eine Umsetzung, also z. B. eine so genannte Kompilierung, des Quellcodes der Zugriffsfunktion vorgesehen. Das umgesetzte (kompilierte) Äquivalent der Zugriffsfunktion ist auf der jeweiligen Hardware ausführbar, so dass der Datenzugriff erfolgen kann.

Die abhängigen Ansprüche sind auf bevorzugte Ausführungsformen der vorliegenden Erfindung gerichtet.

Bevorzugt ist die Datenbasis zumindest zweiteilig organisiert, wobei ein erster Teil der Datenbasis die Daten und ein zweiter Teil der Datenbasis die zumindest eine Zugriffsfunktion zum Zugriff auf die Daten im ersten Teil im Quellcode umfasst. Dadurch ergibt sich eine für eine Pflege der Datenbasis günstige übersichtliche Struktur. Änderungen am ersten Teil der Datenbasis wirken sich zumindest nicht direkt auf den zweiten Teil der Datenbasis aus und umgekehrt, so dass die Konsistenz der beiden Abschnitte der Datenbasis bestmöglich gesichert ist. Bei evtl. Änderungen am ersten Teil der Datenbasis, also den eigentlichen Daten, werden korrespondierende Anpassungen der betroffenen Zugriffsfunktionen vorgenommen.

Um auf die Daten im zweiten Teil der Datenbasis strukturiert zugreifen zu können, sind entsprechende Zugriffsfunktionen notwendig. Diese werden aus dem ersten Teil der Datenbasis, der im Folgenden auch als Funktionsdatenblock bezeichnet wird, entnommen und am oder durch das Automatisierungssystem geeignet im Hinblick auf deren Ausführbarkeit durch ein jeweiliges Zielsystem umgesetzt, insbesondere kompiliert. Dadurch wird Funktionscode für die jeweils verwendete Hardwareplattform, also das Zielsystem, erstellt.

Bevorzugt wird beim Aufruf einer im Quellcode vorliegenden Zugriffsfunktion der Quellcode an das die aufrufende Zielapplikation ausführende Zielsystem übermittelt (exportiert). Die Umsetzung des Quellcodes in ein ausführbares Äquivalent erfolgt dann direkt durch das Zielsystem. Dies hat den Vorteil, dass die oder jede Zugriffsfunktion in der Datenbasis in einem hardwareunabhängigen Quellcode vorgehalten werden kann. Eventuelle Hardwareabhängigkeiten ergeben sich erst durch die Umsetzung zum Erreichen einer Ausführbarkeit auf dem Zielsystem oder der Zielhardware.

Die Verwendung exportierbarer Zugriffsfunktionen ermöglicht eine konsequente und gleichzeitig flexible und benutzerfreundliche Kapselung der Daten der Datenbasis. Eine weitere Kapselung einer Gesamtfunktionalität der Datenbasis ergibt sich, wenn das ausführbare Äquivalent der aufgerufenen Zugriffsfunktion auf Seiten des Zielsystems einem Zugriffsmodul zugeordnet wird, das eine erste Schnittstelle, im Folgenden als Zugriffsmodulschnittstelle bezeichnet, umfasst und wenn eine Nutzung des ausführbaren Äquivalents der aufgerufenen Zugriffsfunktion durch die Zielapplikation mittels einer Applikationsschnittstelle, die einen Zugriff auf die Zugriffsmodulschnittstelle ermöglicht, erfolgt.

Das Zugriffsmodul kann dann über eine definierte und/oder standardisierte Schnittstelle verfügen. Die Schnittstelle basiert insbesondere auf so genannten Funktionsprototypen der im Funktionsdatenblock enthaltenen Zugriffsfunktionen. Jede Umsetzung einer Zugriffsfunktion erfolgt auf Basis der der Schnittstelle zugrunde liegenden Daten. Dieselben Daten stehen auch dem jeweiligen Zielsystem zur Verfügung. Damit ist es möglich, eine hinsichtlich deren Inhalts unbekannte Zugriffsfunktion des Funktionsdatenblocks programmiertechnisch in eine auf dem Zielsystem ablaufende oder ablauffähige Applikation einzubinden. Über die von der Schnittstelle umfassten Funktionsprototypen und die jeweilige, im Zugriffsmodul vorgehaltene kompilierte Zugriffsfunktion aus dem Funktionsdatenblock greift nun das Zielsystem strukturiert auf die im ersten Teil der Datenbasis enthaltenen Daten zu.

Wenn beim Aufruf einer Zugriffsfunktion durch eine Zielapplikation über die Applikationsschnittstelle und die Zugriffsmodulschnittstelle eine Verfügbarkeit eines ausführbaren Äquivalents der aufgerufenen Zugriffsfunktion im Zugriffsmodul überprüft wird, kann in Abhängigkeit vom Ergebnis dieser Überprüfung die jeweilige Zugriffsfunktion entsprechend dem jeweiligen Bedarf bereitgestellt werden. Dazu wird erforderlichenfalls der Quellcode der Zugriffsfunktion aus der Datenbasis abgerufen. Im Anschluss an eine Umsetzung des Quellcodes in ein ausführbares Äquivalent kann das ausführbare Äquivalent ausgeführt werden und die durch die Zielapplikation angeforderten Daten können mittels des ausführbaren Äquivalents der aufgerufenen Zugriffsfunktion der Zielapplikation übermittelt werden. Dies gewährleistet, dass die Datenbasis quasi selbständig "erkennt", welche Zugriffsfunktion benötigt wird und entsprechend bereitgestellt werden muss. Das Zugriffsmodul umfasst danach nur die tatsächlich benötigten Zugriffsfunktionen, wobei sich der Umstand, ob eine Zugriffsfunktion benötigt wird oder nicht, im laufenden Betrieb des Automatisierungssystems, also zur Laufzeit, herausstellt/herausstellen kann.

In einer besonderen Ausgestaltung dieser Ausführungsform der Erfindung kann vorgesehen sein, dass die Überprüfung der Verfügbarkeit eines ausführbaren Äquivalents der aufgerufenen Zugriffsfunktion im Zugriffsmodul einen Vergleich einer ersten Versionskennung des verfügbaren ausführbaren Äquivalents und einer zweiten Versionskennung der Datenbasis umfasst. Damit lässt sich ein evtl. erforderlicher Austausch von im Zugriffsmodul bereits vorhandenen Zugriffsfunktionen automatisch, und zwar ebenfalls zur Laufzeit, realisieren, indem bei jeder Änderung an der Datenbasis eine diesbezügliche Versionskennung, also die zweite Versionskennung, verändert, insbesondere inkrementiert wird. Wenn beim Aufruf einer vom Zugriffsmodul umfassten Zugriffsfunktion ein Vergleich einer mit der jeweiligen Zugriffsfunktion assoziierten Versionskennung, der oben genannten ersten Versionskennung, mit der zweiten Versionskennung, also der jeweils aktuellen Versionskennung der Datenbasis, erfolgt, lässt sich automatisch erkennen, ob die vom Zugriffsmodul umfasste Zugriffsfunktion zum Zugriff auf die veränderte Datenbasis geeignet und/oder vorgesehen ist. Schlägt der Vergleich fehl, wird der Quellcode der jeweiligen Zugriffsfunktion aus dem Funktionsdatenblock erneut an das Zielsystem übertragen, umgesetzt und dem Zugriffsmodul zugeordnet. Auf diese Weise wird der vom Zugriffsmodul umfasste Funktionsumfang stets aktualisiert.

In einer nochmals weiteren Ausgestaltung kann vorgesehen sein, dass die zweite Versionskennung nicht der Datenbasis insgesamt, sondern jeweils eine zweite Versionskennung jeweils einem Quellcode einer Zugriffsfunktion in der Datenbasis zugeordnet ist. Dann kann bei Änderungen der Datenbasis jede Zugriffsfunktion durch Aktualisierung der jeweiligen Versionskennung geeignet markiert werden, so dass ein erneuter Transfer in ein Zugriffsmodul nur noch bei solchen Zugriffsfunktionen erfolgt, die von den Änderungen an der Datenbasis betroffen sind. Auf diese Weise wird nicht nur der stets aktuelle Zustand des Zugriffsmoduls gewährleistet, sondern auch ein mit dem Transfer und der Umsetzung des Quellcodes einzelner oder mehrerer Zugriffsfunktionen einhergehender Ressourcenaufwand auf ein Minimum begrenzt, indem nur noch solche Zugriffsfunktionen transferiert und umgesetzt werden, die von der jeweiligen Änderung an der Datenbasis betroffen sind.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder den Zeichnungen offenbarte Merkmalskombinationen zu beanspruchen.

Das Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder den Zeichnungen enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: ein schematisch vereinfachtes Automatisierungssystem mit einer Anzahl von Automatisierungsgeräten und zumindest einer Datenbasis,
- FIG 2: die Datenbasis und einen Zugriff auf die Datenbasis und
- FIG 3: eine besondere Ausführungsform des Ausführungsbeispiels gemäß FIG 2.

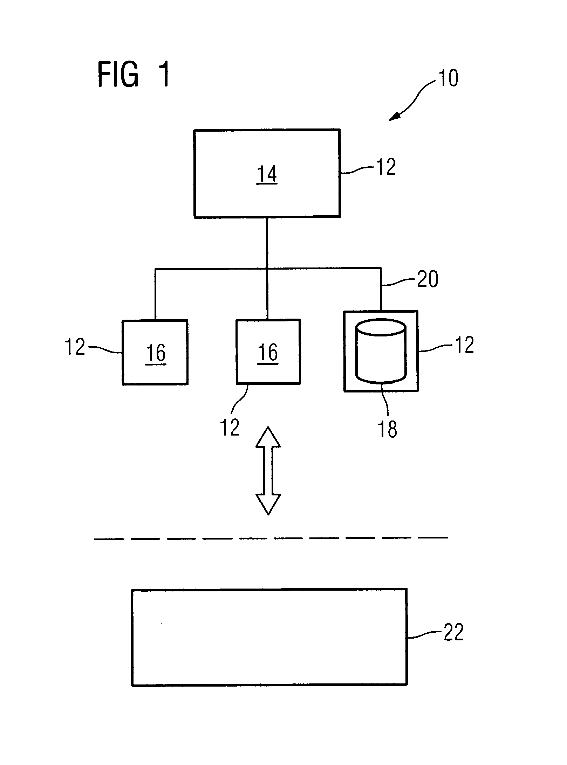

FIG 1 zeigt ein schematisch vereinfachtes Automatisierungssystem 10 mit einer Anzahl von Automatisierungsgeräten 12, darunter ein z. B. als Leitsystem fungierendes zentrales Automatisierungsgerät 14, eine Anzahl dezentraler Automatisierungsgeräte 16 und zumindest ein Automatisierungsgerät 12 mit einem Zugriff auf eine Datenbasis 18. Die Automatisierungsgeräte 12 sind in an sich bekannter Art und Weise kommunikativ, also z. B. über einen Bus 20, miteinander verbunden, so dass in dem Automatisierungssystem 10 alle Automatisierungsgeräte 12 Zugriff auf die Datenbasis 18 haben. Allgemein kann formuliert werden, dass das Automatisierungssystem 10 die Datenbasis 18 umfasst und dass das Automatisierungssystem 10 Zugriff auf die Datenbasis 18 hat. Das Automatisierungssystem 10 ist in an sich bekannter Art und Weise zur Steuerung und/oder Überwachung eines nicht näher dargestellten technischen Prozesses 22 vorgesehen. Zu diesem Zweck ist beim Betrieb des Automatisierungssystems 10 ein lesender und/oder schreibender Zugriff auf den Inhalt der Datenbasis 18 erforderlich. In einer besonderen Ausgestaltung kann das Automatisierungssystem 10 auch aus nur einem Automatisierungsgerät 12 bestehen, das dann entweder die Datenbasis 18 selbst umfasst oder in geeigneter Art und Weise Zugriff auf eine solche Datenbasis 18 hat.

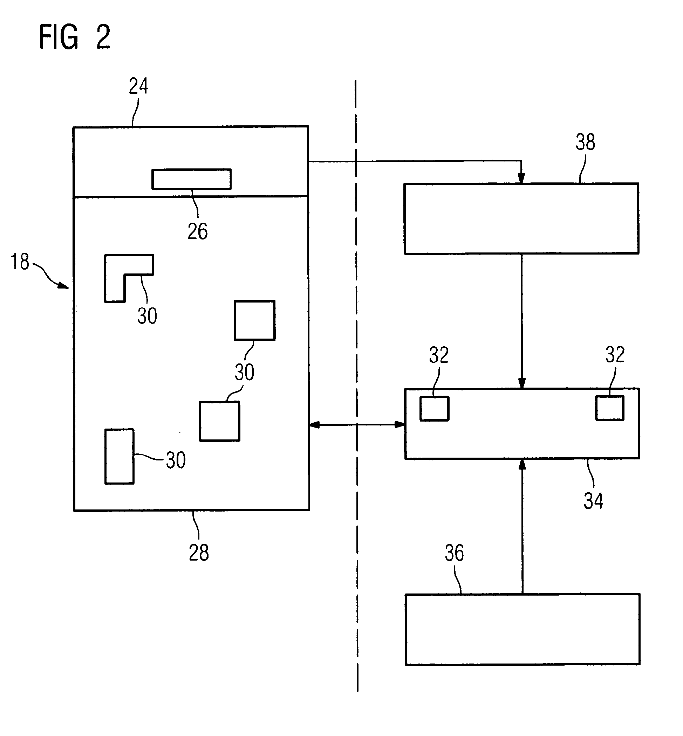

FIG 2 zeigt in schematisch vereinfachter Form die Datenbasis 18 und einen Zugriff auf die Datenbasis 18. Bei dem erläuterten Ausführungsbeispiel ist die Datenbasis 18 zweiteilig organisiert, wobei ein erster Teil 24 zumindest eine Zugriffsfunktion 26 zum Zugriff auf die Datenbasis 18 in einem Quellcode umfasst. Ein zweiter Teil 28 der Datenbasis 18 ist zur Aufnahme von in der Datenbasis 18 vorgeschalteten Nutz- oder Rohdaten 30 vorgesehen. Ein Zugriff auf die Daten 30 erfolgt mittels eines ausführbaren Äquivalents 32 der Zugriffsfunktion 26. Für den Zugriff auf unterschiedliche Daten 30 können unterschiedliche Zugriffsfunktionen 26 vorgesehen sein. Das heißt, es kann sowohl eine Mehrzahl von Zugriffsfunktionen 26 als auch eine Mehrzahl jeweils korrespondierender Äquivalente 32 geben. Zum Zugriff auf die Daten 30 in der Datenbasis 18 ist das ausführbare Äquivalent 32 einer Zugriffsfunktion 26 einem Zugriffsmodul 34 zugeordnet. Der Zugriff auf die Daten 30 erfolgt durch Aufruf des ausführbaren Äquivalents 32 durch eine Zielapplikation 36. Die Zielapplikation 36 wird auf einer Zielhardware oder einem Zielsystem ausgeführt, z. B. einem der Automatisierungsgeräte 12 (vergleiche FIG 1). Zur Erzeugung eines ausführbaren Äquivalents 32 einer Zugriffsfunktion 26 ist eine Umsetzung der in der Datenbasis 18 im Quellcode vorliegenden Zugriffsfunktion 26 vorgesehen. Zur Umsetzung in ein ausführbares Äquivalent 32 sind Umsetzungsmittel, wie insbesondere ein an sich bekannter Compiler, vorgesehen. Zugriffsmodul 34 und Zielapplikation 36 werden normalerweise auf der gleichen Zielhardware, also z. B. einem Automatisierungsgerät 12, vorgehalten. Der Compiler 38 kann ebenfalls auf der jeweiligen Zielhardware vorgehalten sein. Wesentlich ist, dass der Compiler 38 eine Umsetzung des Quellcodes der jeweiligen Zugriffsfunktion 26 in der Form vornimmt, die eine Ausführbarkeit des Äquivalents 32 durch die jeweilige Zielhardware gewährleistet. Insoweit kann der Compiler 38 auch auf anderen Geräten 12 des Automatisierungssystems 10 ausgeführt werden, solange die Ausführbarkeit des generierten Äquivalents 32 für die jeweilige Zielhardware sichergestellt ist.

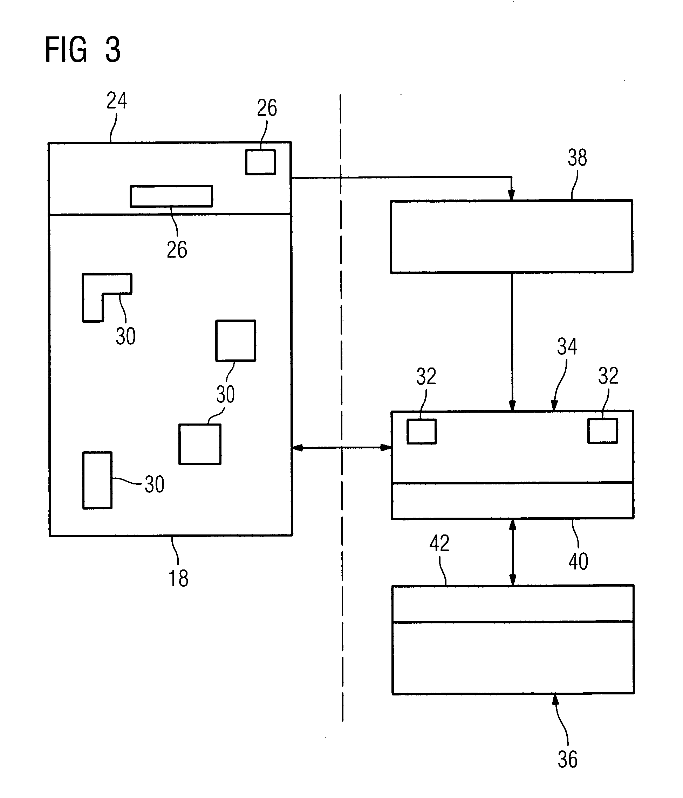

FIG 3 zeigt eine besondere Ausführungsform des Ausführungsbeispiels gemäß FIG 2. Danach umfasst das Zugriffsmodul 34 eine Zugriffsmodulschnittstelle 40, auf die die jeweilige Zielapplikation 36 über eine Applikationsschnittstelle 42 zugreift. Die Applikationsschnittstelle 42 macht die Zugriffsfunktionen 26 und deren Aufrufkonventionen für die jeweilige Zielapplikation 36 bekannt und ermöglicht eine Kompilierung der Zielapplikation 36 zum Erhalt einer ausführbaren Zielapplikation 36. Das Zusammenwirken von Applikationsschnittstelle 42 und Zugriffsmodulschnittstelle 40 ermöglicht einen Zugriff der jeweiligen Zielapplikation 36 auf eine vom Zugriffsmodul 34 umfasste Zugriffsfunktion 26 in ausführbarer Form, also das Äquivalent 32 dieser Zugriffsfunktion 26.

Damit lässt sich die Erfindung kurz wie folgt darstellen: Es wird ein Verfahren zum Betrieb eines Automatisierungssystems 10 mit einem Zugriff auf eine Datenbasis 18 angegeben, wobei der Zugriff auf die Datenbasis 18 mittels zumindest einer vorgegebenen Zugriffsfunktion 26 erfolgt, indem eine in dem Automatisierungssystem 10 ablaufende oder durch das Automatisierungssystem 10 ausgeführte Zielapplikation 36 zum Zugriff auf die Datenbasis 18 die Zugriffsfunktion 26 aufruft, danach die Zugriffsfunktion 26 den Zugriff auf die Datenbasis 18 vornimmt und die durch die Zielapplikation 36 angeforderten Daten 30 an diese liefert, wobei zumindest eine Zugriffsfunktion 26 zum Zugriff auf die Datenbasis 18 in einem Quellcode mit der Datenbasis 18 assoziiert ist und wobei beim oder im Zusammenhang mit dem Aufruf der Zugriffsfunktion 26 eine Umsetzung des Quellcodes der Zugriffsfunktion 26 erfolgt, die deren Ausführung ermöglicht.

Dadurch ergibt sich vorteilhaft einerseits eine Unabhängigkeit von eventuellen Änderungen der Datenbasis 18, indem bei Änderungen an der Datenbasis 18 die zum Zugriff auf die dort enthaltenen Daten 30 vorgesehenen Zugriffsfunktionen 26 in ihrem Quellcode entsprechend angepasst werden, so dass beim Zugriff auf die jeweilige Zugriffsfunktion 26 der aktualisierte Quellcode zur Umsetzung der Zugriffsfunktion 26 in einer ausführbaren Form zugrunde gelegt wird. Darüber hinaus ergibt sich auch eine Hardwareunabhängigkeit, weil der jeweils exportierte Quellcode der Zugriffsfunktion 26 auf Seiten der jeweiligen Zielhardware so umgesetzt werden kann, dass deren Ausführung durch diese Zielhardware möglich ist.

## Patentansprüche

1. Verfahren zum Betrieb eines Automatisierungssystems (10) mit einem Zugriff auf eine Datenbasis (18), wobei der Zugriff auf die Datenbasis (18) mittels zumindest einer vorgegebenen Zugriffsfunktion (26) erfolgt, indem eine in dem Automatisierungssystem (10) ablaufende oder durch das Automatisierungssystem (10) ausgeführte Zielapplikation (36) zum Zugriff auf die Datenbasis (18) die Zugriffsfunktion (26) aufruft, die Zugriffsfunktion (26) den Zugriff auf die Datenbasis (18) vornimmt und durch die Zielapplikation (36) angeforderte Daten (18) an die Zielapplikation (36) liefert, **dadurch gekennzeichnet, dass** zumindest eine Zugriffsfunktion (26) zum Zugriff auf die Datenbasis (18) in einem Quellcode mit der Datenbasis (18) assoziiert ist und dass beim oder im Zusammenhang mit dem Aufruf der Zugriffsfunktion (26) eine Umsetzung des Quellcodes der Zugriffsfunktion (26) erfolgt, die deren Ausführung ermöglicht.

2. Verfahren nach Anspruch 1,
wobei die Datenbasis (18) zumindest zweiteilig organisiert ist und ein erster Teil (24) der Datenbasis (18) die zumindest eine Zugriffsfunktion (26) im Quellcode und ein zweiter Teil (28) der Datenbasis (18) Daten (30) umfasst.

3. Verfahren nach Anspruch 1 oder 2,
wobei beim Aufruf einer im Quellcode vorliegenden Zugriffsfunktion (26) der Quellcode an ein die aufrufende Zielapplikation (36) ausführendes Zielsystem übermittelt wird und die Umsetzung des Quellcodes in ein ausführbares Äquivalent (32) durch das Zielsystem erfolgt.

4. Verfahren nach Anspruch 3,
wobei das ausführbare Äquivalent (32) der aufgerufenen Zugriffsfunktion (26) auf Seiten des Zielsystems einem Zugriffsmodul (34) zugeordnet wird, das eine Zugriffsmodulschnittstelle (40) umfasst, und wobei eine Nutzung des ausführbaren Äquivalents (32) der aufgerufenen Zugriffsfunktion (26) durch die Zielapplikation (36) mittels einer Applikationsschnittstelle (42), die einen Zugriff auf die Zugriffsmodulschnittstelle (40) ermöglicht, erfolgt.

5. Verfahren nach Anspruch 4,
wobei beim Aufruf einer Zugriffsfunktion (26) durch eine Zielapplikation (36) über die Applikationsschnittstelle (42) und die Zugriffsmodulschnittstelle (40) eine Verfügbarkeit eines ausführbaren Äquivalents (32) der aufgerufenen Zugriffsfunktion (26) im Zugriffsmodul (34) überprüft wird und in Abhängigkeit vom Ergebnis der Überprüfung der Quellcode der Zugriffsfunktion (26) aus der Datenbasis (18) abgerufen wird, eine Umsetzung des Quellcodes in ein ausführbares Äquivalent (32) erfolgt, das ausführbare Äquivalent (32) ausgeführt und die durch die Zielapplikation (36) angeforderten Daten (30) mittels des ausführbaren Äquivalents (32) der aufgerufenen Zugriffsfunktion (26) der Zielapplikation (36) bereitgestellt werden.

6. Verfahren nach Anspruch 5,
wobei die Überprüfung der Verfügbarkeit eines ausführbaren Äquivalents (32) der aufgerufenen Zugriffsfunktion (26) im Zugriffsmodul (34) einen Vergleich einer ersten Versionskennung des verfügbaren ausführbaren Äquivalents (32) und einer zweiten Versionskennung der Datenbasis (18) umfasst.

7. Verfahren nach Anspruch 6,
wobei die zweite Versionskennung jeweils einem Quellcode einer Zugriffsfunktion (26) in der Datenbasis (18) zugeordnet ist.

8. Computerprogramm mit durch einen Computer ausführbaren Programmcodeanweisungen zur Implementierung des Verfahrens nach einem der Ansprüche 1 bis 7, wenn das Computerprogramm auf einem Computer ausgeführt wird.

9. Computerprogrammprodukt, insbesondere Speichermedium, mit einem durch einen Computer ausführbaren Computerprogramm gemäß Anspruch 8.
